# EUROPÄISCHE PATENTSCHRIFT

(11) **EP 0 538 759 B1**
(45) Veröffentlichungstag und Bekanntmachung des Hinweises auf die Patenterteilung: **28.02.1996**
(21) Anmeldenummer: 92117793.7
(22) Anmeldetag: 19.10.1992
(51) Int. Cl.: C08C 19/36, C09D 5/44

(54) **Kationische Harze auf Basis von Copolymerisaten aus Butadien und Acrylnitril**
Cationic resins based on copolymers of butadiene and acrylonitrile
Résines cationiques à base de copolymères de butadiène et acrylonitrile

(30) Priorität: 25.10.1991 DE 4135239
(43) Veröffentlichungstag der Anmeldung: 28.04.1993
(73) Patentinhaber: BASF Lacke + Farben AG, D-48165 Münster-Hiltrup (DE)
(72) Erfinder: Faul, Dieter, Dr., W-6702 Bad Duerkheim (DE); Hoffmann, Gerhard, Dr., W-6701 Otterstadt (DE); Huemke, Klaus, Dr., W-6701 Friedelsheim (DE); Heimann, Ulrich, Dr., W-4400 Muenster (DE)
(74) Vertreter: Langfinger, Klaus-Dieter, Dr.

(56) Entgegenhaltungen:
- EP-A- 0 385 300
- WO-A-84/02528
- US-A- 4 025 578

## Beschreibung

Die vorliegende Erfindung betrifft kationische Harze, erhältlich durch Umsetzung von
A) einem carboxylgruppenhaltigen Copolymerisat, enthaltend als Comonomere
   a) 35-100 mol-% Butadien
   b) 0-45 mol-% Acrylnitril und
   c) 0-20 mol-% weiteren Comonomeren, welches ein mittleres Molekulargewicht von 500-50 000 hat und pro Molekül durchschnittlich 1,5 bis 4 Carboxylgruppen trägt
und
B) einem Kondensationsprodukt aus
   d) einer mehrwertigen aliphatischen C₁₀-C₁₀₀-Carbonsäure und
   e) einem bezüglich primärer und sekundärer Aminogruppen mehrwertigen Amin,
   wobei die Menge an e) so zu bemessen ist, daß rechnerisch auf eine Carboxylgruppe von d) 1,05 bis 4 Aminogruppen entfallen,
mit der Maßgabe, daß die Menge an B) so gewählt wird, daß 1,05 bis 4 mol Aminogruppen auf ein Mol der in A) vorhandenen Carboxylgruppen entfallen.

Außerdem betrifft die Erfindung die Herstellung dieser Harze, ihre Verwendung als Bindemittelbestandteil für die Elektrotauchlackierung sowie die hierbei erhältlichen beschichteten Gegenstände.

Zur Herstellung von Elektrotauchlackbädern werden die Aminogruppen enthaltenden Bindemittel und Bindemittelgemische protoniert und anschließend in Wasser dispergiert. Die Lackierung erfolgt durch Eintauchen des als Kathode geschalteten metallischen Gegenstandes, z.B. einer metallischen Autokarosserie in das Elektrotauchbad. Unter dem Einfluß des elektrischen Feldes wandern die kationisch dispergierten Lackteilchen zum metallischen Substrat, wo sie sich nach elektrischer Entladung abscheiden.

Nach beendeter Abscheidung wird die so erhaltene Beschichtung einer thermischen Vernetzungsreaktion unterworfen.

An die so erhaltenen Beschichtungen und damit auch an die Bindemittel selber werden verschiedene Qualitätsansprüche gestellt, z.B. hinsichtlich der Haftfestigkeit, des Korrosionsschutzes, der chemischen Widerstandsfähigkeit und der mechanischen Beständigkeit. Die jeweils optimalen Werte für all diese Eigenschaften lassen sich praktisch aber nicht gleichzeitig erzielen, weil die Anforderungen an das Bindemittel weitgehend konträr sind.

So empfehlen sich beispielsweise für einen guten Korrosionsschutz Bindemittel mit einer relativ hohen Glasübergangstemperatur, jedoch sind die damit erhältlichen Beschichtungen recht spröde, so daß ihre Schlagfestigkeit zu wünschen übrig läßt.

Aus der EP-A 3 85 300 sind Harze bekannt, die als Zusatzstoffe zu den üblichen kationischen Bindemitteln für die Elektrotauchlackierung eine Verbesserung der Schlagfestigkeit der damit erhältichen Beschichtungen bewirken. Bei diesen Additiven handelt es sich um Copolymere aus Butadien und Acrylnitril mit endständigen Carboxylgruppen, die zunächst mit einem niedermolekularen Diamin und danach mit einem Epoxidharz polymeranalog umgesetzt werden.

Aufgabe der vorliegenden Erfindung war es, Bindemitteladditive zu finden, die zur weiteren Verbesserung der elektrophoretisch erzeugten Beschichtungen führen.

Demgemäß wurden die eingangs definierten Harze gefunden.

Die Copolymerisate A) enthalten 35-100, vorzugsweise 60-95 mol-% Butadien, 0-45, vorzugsweise 10-30 mol-% Acrylnitril und zur Abwandlung ihrer Eigenschaften gewünschtenfalls bis zu 20 mol-% weiterer Monomere wie beispielsweise Styrol und Vinylacetat. Die Molprozentangabe ist dabei jeweils auf den Gesamtgehalt an Comonomeren bezogen. Die Copolymerisate A) können mit Hilfe üblicher Initiatoren und Regler, z.B. von tert.-Butylperoctoat, tert.-Butylperpivalat hergestellt werden, welche bei der Polymerisation bekannterweise weitgehend miteingebaut werden.

Sie enthalten 1,5 bis 4 Carboxylgruppen, wobei Polymerisate mit 2 Carboxylgruppen, die meist endständig sind, bevorzugt werden.

Die Carboxylgruppen können durch Verwendung carboxylierten Initiatoren, z.B. von 4,4'-Azobis(4-cyanoisobuttersäure), in das Copolymerisat eingeführt werden, wie z.B. im Butadien-Acrylnitril Copolymer Hycar® CTBN 1300 von B.F. Goodrich der Fall ist.

Man kann das Copolymerisat A) aber auch durch Copolymerisation mit entsprechenden Mengen einer olefinisch ungesättigten Säure wie Acrylsäure herstellen.

Vorzugsweise haben die Copolymerisate A) ein zahlenmittleres Molekulargewicht im Bereich von 500 bis 50 000, besonders von 1 000 bis 10 000.

Die Komponente B) ist ein Kondensationsprodukt aus einer mehrwertigen aliphatischen C₁₀-C₁₀₀-Carbonsäure (d) und einem mehrwertigen Amin.

Als Säuren (d) kommen vor allem Dicarbonsäuren in Betracht, beispielsweise α, ω-Dicarbonsäuren mit 10 bis 18 C-Atomen, vor allem aber dimere und oligomere Fettsäuren, die sich von den natürlichen C₁₀-C₂₄-Fettsäuren oder von deren Gemischen ableiten.

Die dimeren und oligomeren Fettsäuren sind bekannt und zum großen Teil im Handel erhältlich. Beispiele für solche Säuren sind Leinölfettsäure (Linolsäure, Linolensäure), Ölsäure sowie die entsprechenden Dimere.

Die Säurezahl der Säuren (d) liegt im Bereich von 100 bis 500.

Geeignete mehrwertige Amine (e) sind insbesondere zweiwertige nicht-aromatische Amine mit einem Molekulargewicht zwischen 50 und 300. Solche Amine sind z.B. Alkandiamine wie Tetramethylendiamin, Hexamethylendiamin und Dekanmethylendiamin sowie aliphatische Diamine mit Ethergruppierungen wie 1,14-Diamino-4,11-dixoatetradecan oder Oligomere des Ethylenoxids oder Propylenoxids mit endständigen Aminogruppen. Auch Diamine mit cyclischer Struktur wie z.B. Piperazin(1,4-Diaminocyclohexan) und 2-Aminoethyl-piperazin kommen in Betracht.

Aromatische Amine können ebenfalls verwendet werden, vorzugsweise aber nur im Gemisch mit nichtaromatischen Aminen. Aromatische Amine bewirken zwar im allgemeinen eine größere Härte des Überzugs, gleichzeitig vermindern sie aber, wie meist weniger erwünscht, die Elastizität.

Die gleiche Überlegung gilt hinsichtlich höherer Amine, die in solchen Anteilen mitverwendet werden können, daß die entstehenden Harze noch löslich bleiben. Ferner werden Amine mit primären Aminogruppen bevorzugt, jedoch eignen sich auch Amine mit sekundären Aminogruppen. Tertiäre Aminogruppen können ebenfalls zugegen sein, gelten im vorliegenden Zusammenhang aber als inerte Substituenten, da sie an der Amidierungsreaktion nicht teilnehmen.

Auch Amine (e) sind im Handel erhältlich.

Die Komponenten (d) und (e) sind in solchen Mengen miteinander umzusetzen, daß rechnerisch auf eine Carboxylgruppe von (d) 1,05 bis 4, vorzugsweise 1,5 bis 2,5 Aminogruppen von (e) entfallen.

Man kann die Umsetzung von Säuren (d) und Aminen (e) in an sich bekannter Weise vornehmen, indem man die Komponenten in einem hochsiedenden Lösungsmittel bei 130-250°C miteinander zur Reaktion bringt, wobei das Amin stets im Überschuß vorliegen sollte und wobei das Reaktionswasser zweckmäßigerweise laufend aus dem Reaktionsgemisch entfernt wird. Als Lösungsmittel eignen sich beispielsweise Toluol oder Xylol in den hierfür üblichen Mengen.

Bei der so erhaltenen Komponente B) handelt es sich um ein zwei- oder mehrwertiges höhermolekulares Amid-amin mit überwiegend aliphatischem Charakter.

Die Umsetzung des Copolymerisats A) mit der Amid-amin Komponente B) kann auf gleiche Weise vorgenommen werden wie die Herstellung der Komponenten B), so daß sich nähere Angaben hierzu erübrigen.

Die Mengen an A) und B) sind so zu bemessen, daß die Carboxylfunktion von A) praktisch vollständig mit den Aminfunktionen von B) amidiert werden und daß das Kondensationsprodukt im Mittel pro Mol noch 1 bis 4 primäre oder sekundäre Aminogruppen enthält.

Diese verbleibenden Aminogruppen sorgen für den kationischen Charakter des Harzes und damit für dessen Eignung als Bindemittelbestandteil für die Elektrotauchlackierung, und außerdem sind sie erforderlich, um nach der Abscheidung die Härtung durch Vernetzung zu ermöglichen.

Die erfindungsgemäßen Harze können zwar als alleiniges Bindemittel für die Elektrotauchlackierung verwendet werden, jedoch erhält man in diesem Falle sehr weiche Beschichtungen, wie sie nur ausnahmsweise erwünscht sein dürften. Von wesentlich größerer Bedeutung sind sie hingegen als sogenannte Bindemitteladditive, also als Bindemittelkomponente im Gemisch mit anderen Bindemitteln, den sogenannten Grundharzen, wobei der Anteil der Additive, bezogen auf die Gesamtmenge der Bindemittel (also ohne zusätzliche Vernetzungskomponente und sonstige Stoffe) im allgemeinen 5 bis 30, vorzugsweise 5-20 Gew.-% beträgt.

Dabei können die erfindungsgemäßen Harze sowohl als teilverträgliche Mischungen mit den Grundharzen zusammen dispergiert werden oder als separate Dispersion der fertigen Grundharzdispersion zugesetzt werden.

Die erfindungsgemäßen Harze können durch Neutralisation oder Teilneutralisation mit einer Säure in Wasser dispergiert werden. Geeignete Säuren sind organische Säuren wie Milchsäure, Essigsäure und Ameisensäure, vorzugsweise Essigsäure oder anorganische Säuren wie Phosphorsäure. Die wäßrigen Dispersionen können Feststoffgehalte von vorzugsweise 5-40, insbesondere 15-35 Gew.-% aufweisen.

Die Grundharze sind basische Polymere,die als basische Gruppen primäre, sekundäre oder tertiäre Aminogruppen tragen. Es lassen sich auch Grundharze verwenden, die Phosphonium- oder Sulfoniumgruppen tragen. In aller Regel enthalten diese Grundharze zusätzlich noch funktionelle Gruppen, z.B. Hydroxylgruppen oder olefinische Doppelbindungen.

Als derartige Grundharze, deren Molmasse vorzugsweise zwischen 2 000 und 200 000 liegt, kommen Polymerisate, z.B. Aminoacrylat- und -methacrylatharze, Polyaddukte wie Aminopolyurethanharze und Polykondensate wie Aminoepoxidharze in Betracht.

Für Lackgrundierungen mit guten Korrosionsschutzeigenschaften werden als Grundharze bevorzugt Aminoepoxidharze eingesetzt. Aminoepoxidharze sind beispielsweise in der EP-A 134 983, der EP-A 165 556, der EP-A 167 029 oder in der DE-A 34 22 457 oder der DE-A 34 44 410 beschrieben.

Man erhält sie in an sich üblicher Weise durch Umsetzung von epoxidgruppenhaltigen Harzen mit gesättigten und/oder ungesättigten primären und/oder sekundären Aminen oder Aminoalkoholen. Als Epoxidharze kommen Verbindungen mit im Mittel 1,5 bis 3, bevorzugt 2 Epoxidgruppen pro Molekül und mittleren Molekulargewichten von 300 bis 6 000 in Betracht.

Vor allem eignen sich Glycidylether von im Mittel 2 Hydroxygruppen im Molekül enthaltenden Polyphenolen, wobei sich als Phenolkomponente vor allem 2,2-Bis-(4-hydroxyphenyl)-propan (Bisphenol A) empfiehlt.

Epoxidharze mit höherem Molekulargewicht erhält man durch Umsetzung der genannten Diglycidylether mit einem Polyphenol wie 2,2-Bis-(4-hydroxyphenyl)-propan.

Das Aminoepoxidharz kann auch mit gesättigten oder ungesättigten Polycarbonsäuren modifiziert sein, beispielsweise mit Adipinsäure, Fumarsäure oder einer dimereren Fettsäure.

Man kann auch Grundharze verwenden, die zusätzlich mit halbblockierten Isocyanaten umgesetzt worden sind und selbstvernetzende Eigenschaften haben. Solche Harze sind beispielsweise in der EP-A 273 247 oder der US 4 692 503 beschrieben.

Falls die Grundharze keine selbstvernetzenden Gruppen tragen, ist ferner eine Vernetzungskomponente erforderlich.

Geeignete Vernetzer für diese Grundharze sind z.B. Harnstoffkondensationsprodukte wie sie in der DE-A 33 11 514 beschrieben sind oder phenolische Mannich-Basen gemäß der DE-A 34 22 457. In der EP-A 134 983 werden als weitere mögliche Vernetzer auch geblockte Isocyanate oder Aminoplastharze wie Harnstoff-Formaldehydharze, Melaminharze oder Benzoguanaminharze erwähnt.

Weiterhin können die Standard-Elektrotauchbäder noch Pigmentpasten und übliche Hilfsmittel enthalten. Pigmentpasten sind beispielsweise aus einem Reibharz und Pigmenten wie Titandioxid, Ruß oder Aluminiumsilikaten sowie Hilfs- und Dispergiermitteln erhältlich. Geeignete Reibharze sind beispielsweise in der EP-A 107 089 oder der EP-A 251 772 beschrieben.

Grundharz und Additiv werden vorzugsweise in Form von wäßrigen Dispersionen eingesetzt, und zwar entweder getrennt oder als gemeinsame Dispersion.

Die Abscheidung der Lackfilme bei der kathodischen Elektrotauchlackierung erfolgt üblicherweise bei 20 bis 35°C, vorzugsweise 26 bis 32°C, während 5 bis 500 sec, vorzugsweise 60 bis 300 sec, bei Abscheidespannungen von 50 bis 500 V. Der zu beschichtende Gegenstand wird als Kathode geschaltet.

Anschließend können die Lackfilme bei Temperaturen im Bereich von 120 bis 210°C, vorzugsweise 140 bis 180°C eingebrannt werden.

Die erfindungsgemäßen Überzüge weisen eine sehr gute Elastizität und Korrosionsbeständigkeit auf und eignen sich hervorragend als Grundierungen für Mehrschichtlacksysteme, denen sie neben gutem Korrosionschutzverhalten auch eine gute Resistenz gegen mechanische Belastungen wie beispielsweise Steinschlagschäden verleihen.

Ein solches Mehrschichtlacksystem kann beispielsweise dreischichtig sein, wobei auf die kathodisch abgeschiedene Grundierungsschicht eine übliche Füllschicht, beispielsweise auf Polyesterbasis aufgebracht wird, worauf sich eine Deckschicht aus handelsüblichen Decklacken anschließt.

### Beispiele

### I. Herstellung von Fettsäureamiden B Allgemeine Vorschrift

Dimere Leinölfettsäure (Handelsprodukt Pripol® 1013 der Unichema, Säurezahl 195) und ein Diamin wurden in Gegenwart von ca. 10 Gew.-% Xylol (bezogen auf die Menge von Säure und Amin) solange unter laufender Entfernung des Reaktionswassers auf 190°C erhitzt, bis die Säurezahl der Mischung auf Null gesunken war, was etwa 5 bis 10 Stunden in Anspruch nahm. Da die Kondensationsprodukte für die weiter Umsetzung vorgesehen waren, wurden sie in der xylolischen Lösung belassen. Die Einzelheiten dieser Versuche sind der nachstehenden Tabelle zu entnehmen.

| Bsp. | dimere Fettsäure Menge [g] | Diamin Menge [g] | Aminzahl des Kondensationsproducktes [mg KOH/g] |
|---|---|---|---|
| B/1 | 870 | 2-Aminoethylpiperazin 388 | 271 |
| B/2 | 580 | 2-Aminoethylpiperazin 388 | 418 |
| B/3 | 1625 | Hexamethylendiamin 465 | 142 |
| B/4 | 928 | Hexamethylendiamin 348 | 275 |
| B/5 | 580 | 1,14-Diamino-4,11-dioxatetradecan 464 | 114 |
| B/6 | 290 | Jeffamine® D230¹⁾ 237 | 111 |
| B/7 | 290 | Jeffamine® D400¹⁾ 448 | 82 |
| B/8 | 290 | Jeffamine D2000¹⁾ 246 | 24 |

| | | | |
|---|---|---|---|
| ¹⁾ bei diesen Produkten der Texaco Chem. Comp. handelt es sich um oligomerisiertes 1,2-Propylenoxid mit 2 endständigen Aminogruppen, wobei das mittlere Molekulargewicht bei 230 bzw. 400 bzw. 2 000 liegt. | | | |

### II. Herstellung der Bindemitteladditive Allgemeine Vorschrift

### Beispiele 1 bis 8

Ein Copolymerisat der Goodrich (Hycar® CTBN1300X13, Säurezahl 32) aus 74 mol-% Butadien und 26 mol-% Acrylnitril mit einem mittleren Molekulargewicht von 3 200, welches pro Molekül 2 endständige Carboxylgruppen aufweist (Komponente A), wurde in Gegenwart von 15 Gew.-% Xylol (bezogen auf die Menge von Copolymerisat und Komponente B) mit einer Komponente B unter laufender Entfernung des Reaktionswassers solange auf 190°C erhitzt, bis die Säurezahl der Mischung auf etwa 1 bis 4 gesunken war (Reaktionszeit etwa 3 bis 8 Stunden). Die Einzelheiten dieser Beispiele sind der folgenden Tabelle zu entnehmen.

| Bsp. | Komponente A Menge [g] | Komponente B Menge [g] | Bindemitteladditiv | | |
|---|---|---|---|---|---|
| | | | Aminzahl [mg KOH/g] | Säurezahl [mg KOH/g] | K-Wert²⁾ |
| 1 | 414 | B/1 859 | 67 | 1,3 | 35 |
| 2 | 714 | B/2 3436 | 43 | 0,9 | 31 |
| 3 | 315 | B/3 687 | 22 | 3,5 | 49 |
| 4 | 890 | B/4 3436 | 18 | 2,6 | 54 |
| 5 | 1969 | B/5 3436 | 21 | 2,4 | 55 |
| 6 | 202 | B/6 344 | 24 | 2,0 | 32 |
| 7 | 275 | B/7 344 | 22 | 1,8 | 35 |
| 8 | 459 | B/8 172 | 12 | 2,6 | 30 |

| | | | | | |
|---|---|---|---|---|---|
| ²⁾ nach Fikentscher | | | | | |

### III. Herstellung von Elektrotauchbädern

### 1. Herstellung des Bindemittels

a1) Ein Gemisch aus 5 800 g Hexamethylendiamin, 7 250 g dimerer Leinölfettsäure und 1 400 g Leinölfettsäure wurde langsam auf 195°C erhitzt, wobei das entsprechende Reaktionswasser (etwa 540 g) abdestilliert wurde. Anschließend wurde das Gemisch auf 100°C abgekühlt und mit 5 961 g Toluol auf einen Feststoffgehalt von 70 Gew.-% verdünnt. Das Produkt hatte eine Aminzahl von 197 mg KOH/g.
a2) 4 850 g eines Diglycidylethers auf Basis 2,2-Bis-(4-hydroxyphenyl)-propan (Bisphenol A) mit einem Epoxidäquivalentgewicht von 485 wurde in einer Mischung aus 1 039 g Toluol und 1 039 g Isobutanol unter Erwärmen auf 80°C gelöst. Die so entstandene Lösung wurde bei 60°C mit einer Lösung aus 300 g N-Methyl-N-hydroxyethylamin und 128 g Isobutanol versetzt, wobei sich unter Erwärmung ein Additionsprodukt bildete, welches anschließend mit 1 850 g der nach a1) erhaltenen toluolischen Lösung versetzt wurde. Die so erhaltene Reaktionsmischung wurde 2 Stunden auf 80°C erwärmt.

### 2. Herstellung des Vernetzers

Eine Mischung aus 1,32 kg Toluol, 0,42 kg Trimethylolpropan und 0,72 kg Bisphenol A wurde bei 60°C solange gerührt, bis eine homogene Lösung entstanden war. Diese Lösung wurde zu einem auf 60°C erwärmten Gemisch aus 3,45 kg Isophorandiisocyanat, 0,86 kg Toluol und 0,0034 kg Dibutylzinndilaurat gegeben. Das Gemisch wurde 2 Stunden bei einer Temperatur von 60°C gehalten und dann mit 2,0 kg Dibutylamin versetzt, wobei die Zugabegeschwindigkeit so eingestellt wurde, daß die Temperatur des Reaktionsgemisches 80°C nicht überstieg. Anschließend wurden 1,11 kg Toluol zugegeben, wonach die Lösung nach 1 Stunde bei 80°C gehalten wurde.

### 3. Herstellung der Pigmentpaste

Eine Mischung aus 526 g des nach III.1. erhaltenen Bindemittels, 169 g Ethylenglykolmonobutylether, 600 g Wasser und 16,5 g Essigsäure wurden zusammen mit 800 g Titandioxid, 11 g Russ und 50 g basischen Bleisilicat solange in einer Kugelmühle vermahlen, bis die mittlere Korngröße der Pigmentteilchen 9 µm betrug. Danach wurde die Paste mit Wasser auf einen Feststoffgehalt von 47 Gew.-% eingestellt.

### 4. Herstellung der Elektrotauchlackdispersionen

a) Herstellung der Elektrotauchlackdispersionen E 1 bis E 8
   Allgemeine Vorschrift
   730 g des Bindemittels gemäß III.1., 365 g des Vernetzers gemäß III.2. und 170 g eines Additivs gemäß den Beispielen 1 bis 8 wurden in Form ihrer bei der Herstellung anfallenden Lösungen unter Zusatz von 20 g Essigsäure in 1690 g Wasser dispergiert, worauf die Lösungsmittel als wasserhaltige Azeotrope abdestilliert wurden. Anschließend wurde der Feststoffgehalt der Dispersion durch Zusatz von Wasser auf 33 Gew.-% eingestellt.
b) Herstellung einer Additivdispersion A1
   428,6 g eines Additivs gemäß Beispiel 1 wurde in 61,7 g Ethylenglykolmonobutylether und 109,7 g Isobutanol gelöst. Diese Lösung wurde bei 45°C mit 10,7 g konzentrierte Essigsäure neutralisiert und in 900 g Wasser dispergiert. Anschließend wurden bei 40°C und 80 mbar 400 g eines Lösungsmittel/Wasser-Azeotrops abdestilliert. Der Feststoffgehalt der Dispersion betrug 26,9 Gew.-%.
c) Herstellung einer Additivdispersion A2
   400 g einer 50 gew.-%igen Lösung eines Additivs gemäß Beispiel 2 in einem Gemisch aus 60 g Xylol, 40 g Ethylenglykolmonobutylether, und 100 g Isobutanol wurde bei 45°C mit 4,6 g Essigsäure neutralisiert und in 600 g Wasser dispergiert. Anschließend wurden bei 40°C und 80 mbar etwa 90 g einen Lösungsmittel/Wasser-Azeotrop abdestilliert. Die so erhaltene Dispersion wies einen Feststoffgehalt von 24,2 Gew.-% auf.
d) Herstellung einer Additivdispersion A3
   600 g einer 50 gew.-%igen Lösung eines Additivs gemäß Beispiel 3 in einer Mischung aus 53 g Xylol, 53 g Ethylenglykolmonobutylether und 194 g Isobutanol wurde bei 45°C mit 5 g Essigsäure neutralisiert und mit 900 g Wasser dispergiert. Anschließend wurden bei 40°C und 80 mbar etwa 400 g eines Lösungsmittel/Wasser-Azeotrops abdestilliert. Der Feststoffgehalt der Dispersion betrug 20 Gew.-%.
e) Herstellung einer Elektrotauchlackdispersion E 0 (Grundharz + Vernetzer)
   700 g eines Bindemittels gemäß III.1. und 300 g eines Vernetzers gemäß III.2. wurden mit 19 g Essigsäure neutralisiert und in 1350 g Wasser dispergiert, worauf die noch vorhandenen Lösungsmittel als wasserhaltige Azeotrope abdestilliert wurden. Anschließend wurde durch Zugabe von Wasser ein Feststoffgehalt von 35 Gew.-% eingestellt.

### 5. Herstellung der Elektrotauchbäder Nr. 0 bis 11

a) Nr. 0 bis 8
   Die Dispersionen E 0 bis E 8, wurden mit 775 g der Pigmentpaste gemäß III.3. vermischt und mit Wasser auf ein Volumen von 5000 ml aufgefüllt.
b) Nr. 9 bis 11
   Zu einem gemäß a) unter Verwendung der Dispersion E 0 hergestellten Elektro-Tauchbad wurden die Additivdispersion A1 bis A3 in den folgenden Mengen zugesetzt:
   - Elektrotauchbad Nr. 9: : E 0 + 476 g A1
   - Elektrotauchbad Nr. 10: : E 0 + 529 g A2
   - Elektrotauchbad Nr. 11: : E 0 + 641 g A3

### 6. Elektrophoretische Beschichtung

Bei einer Abscheidespannung U[V] wurden auf kathodisch geschaltete zinkphosphatierte Prüfbleche aus Stahl innerhalb von 2 min Lackfilme abgeschieden. Diese Lackfilme wurden anschließend im Laufe von 20 min bei 160°C thermisch gehärtet.

Anschließend wurde die Schlagfestigkeit durch Messung der Schlagtiefung (Reverse Impact) mit einem mandrel impact tester der Firma Gardner nach ASTM D2794 getestet.

Die Ergebnisse dieser Versuche sind in Tabelle III aufgelistet.

**Tabelle III**

| Elektrotauchbad Nr. | U[V] | Schichtdicke [µm] | Reverse Impact [Nm] |
|---|---|---|---|
| 0 | 300 | 24,6 | < 2,3 |
| 1 | 300 | 25,0 | 13,6 |
| 2 | 300 | 24,5 | 18,1 |
| 3 | 200 | 25,0 | 6,8 |
| 4 | 300 | 27,7 | 4,5 |
| 5 | 320 | 26,5 | 5,7 |
| 6 | 300 | 26,0 | 18,1 |
| 7 | 270 | 26,0 | 18,1 |
| 8 | 270 | 27,5 | 15,8 |
| 9 | 290 | 23,5 | 13,6 |
| 10 | 270 | 24,7 | 11,3 |
| 11 | 250 | 25,0 | 5,7 |

## Patentansprüche

1. Kationische Harze, erhältlich durch Umsetzung von
A) einem carboxylgruppenhaltigen Copolymerisat, enthaltend als Comonomere
a) 35-100 mol-% Butadien
b) 0-45 mol-% Acrylnitril und
c) 0-20 mol-% weitere Comonomere,
welches ein mittleres Molekulargewicht von 500-50 000 aufweist und pro Molekül durchschnittlich 1,5 bis 4 Carboxylgruppen trägt,
und
B) einem Kondensationsprodukt aus
d) einer mehrwertigen aliphatischen C₁₀-C₁₀₀-Carbonsäure und
e) einem bezüglich primärer und sekundärer Aminogruppen mehrwertigen Amin,
wobei die Menge an e) so zu bemessen ist, daß rechnerisch auf eine Carboxylgruppe von d) 1,05 bis 4 Aminogruppen entfallen,
mit der Maßgabe, daß die Menge an B) so gewählt wird, daß 1,05 bis 4 mol Aminogruppen auf ein Mol der in A) vorhandenen Carboxylgruppen entfallen.

2. Kationische Harze nach Anspruch 1, deren Komponente A) ein Butadien/Acrylnitril-Copolymer mit einem Acrylnitrilgehalt von 5 bis 45 Gew.-% ist, bei dem jedes Molekül durchschnittlich 1,5 bis 4 Carboxylgruppen trägt.

3. Verfahren zur Herstellung kationischer Harze gemäß Anspruch 1 oder 2, dadurch gekennzeichnet, daß man
A) ein carboxylgruppenhaltiges Copolymerisat, enthaltend als Comonomere
a) 35-100 mol-% Butadien
b) 0-45 mol-% Acrylnitril und
c) 0-20 mol-% weitere Comonomere, welches ein mittleres Molekulargewicht von 500-50 000 aufweist und pro Molekül durchschnittlich 1,5 bis 4 Carboxylgruppen trägt
mit
B) einem Kondensationsprodukt aus
d) einer mehrwertigen aliphatischen C₁₀-C₁₀₀-Carbonsäure und
e) einem bezüglich primärer und sekundärer Aminogruppen mehrwertigen Amin,
wobei die Menge an e) so zu bemessen ist, daß rechnerisch auf eine Carboxylgruppe von d) 1,05 bis 4 Aminogruppen entfallen,
in Gegenwart von organischen Lösungsmitteln bei 130-250°C umsetzt, mit der Maßgabe, daß die Menge an B) so gewählt wird, daß 1,05 bis 4 mol Aminogruppen auf ein Mol der in A) vorhandenen Carboxylgruppen entfallen.

4. Wäßrige Dispersionen, enthaltend 5-40 Gew.-% eines kationischen Harzes gemäß den Ansprüchen 1 bis 3.

5. Verwendung der kationischen Harze gemäß den Ansprüchen 1 bis 3 als Bindemitteladditive für Elektrotauchlacke zur Verbesserung der mechanischen Belastbarkeit der Lackfilme.

6. Verwendung der Dispersionen gemäß Anspruch 4 als Zusatz zu Elektrotauchlackierbädern.

7. Elektrotauchlackierbäder, enthaltend, bezogen auf den Gesamtpolymergehalt, 5-30 Gew.-% der kationischen Harze gemäß den Ansprüchen 1 bis 3.

8. Mittels kathodischer Elektrotauchlackierung beschichteter Gegenstand, erhältlich unter Verwendung eines Elektrotauchlackierbades gemäß Anspruch 7.

## Claims

1. Cationic resins obtainable by reacting
A) a carboxyl-containing copolymer containing as comonomers
a) 35-100 mol % of butadiene,
b) 0-45 mol % of acrylonitrile, and
c) 0-20 mol % of further comonomers, which has an average molecular weight of 500-50,000 and carries on average from 1.5 to 4 carboxyl groups per molecule,
and
B) a condensation product of
d) a polybasic aliphatic C₁₀-C₁₀₀-carboxylic acid, and
e) an amine which is polyfunctional in respect of primary and secondary amino groups,
the amount of e) having been determined in such a way that, arithmetically, there are from 1.05 to 4 amino groups for every carboxyl group of d),
with the proviso that the amount of B) is chosen in such a way that there are from 1.05 to 4 mol of amino groups per mole of the carboxyl groups present in A).

2. Cationic resins as claimed in claim 1, whose component A) is a butadiene-acrylonitrile copolymer having an acrylonitrile content of from 5 to 45% by weight where every molecule carries on average from 1.5 to 4 carboxyl groups.

3. A process for preparing cationic resins as claimed in claim 1 or 2, which comprises reacting
A) a carboxyl-containing copolymer containing as comonomers
a) 35-100 mol % of butadiene,
b) 0-45 mol % of acrylonitrile, and
c) 0-20 mol % of further comonomers,
which has an average molecular weight of 500-50,000 and carries on average from 1.5 to 4 carboxyl groups per molecule,
with
B) a condensation product of
d) a polybasic aliphatic C₁₀-C₁₀₀-carboxylic acid, and
e) an amine which is polyfunctional in respect of primary and secondary amino groups,
the amount of e) having been determined in such a way that, arithmetically, there are from 1.05 to 4 amino groups for every carboxyl group of d),
in the presence of organic solvents at 130-250°C, with the proviso that the amount of B) is chosen in such a way that there are from 1.05 to 4 mol of amino groups per mole of the carboxyl groups present in A).

4. Aqueous dispersions containing 5-40% by weight of a cationic resin as claimed in any of claims 1 to 3.

5. The use of the cationic resins as claimed in any of claims 1 to 3 as binder additives for electrocoating compositions for improving the mechanical stability of the paint films.

6. The use of the dispersions as claimed in claim 4 as additives in electrocoating baths.

7. Electrocoating baths containing, based on the total polymer content, 5-30% by weight of the cationic resins as claimed in any of claims 1 to 3.

8. A cathodically electrocoated article obtainable using an electrocoating bath as claimed in claim 7.

## Revendications

1. Résines cationiques, que l'on peut obtenir par réaction
A) d'un copolymérisat contenant des groupements carboxyles, comprenant en tant que comonomère
a) de 35 - 100 % en mole de butadiène
b) de 0 - 45 % en mole d'acrylonitrile et
c) de 0 - 20 % en mole de comonomères supplémentaires,
qui présente un poids moléculaire moyen de 500 - 50 000 et porte en moyenne par molécule 1,5 à 4 groupements carboxyles,
et
B) d'un produit de condensation
d) d'un acide carboxylique polyvalent aliphatique en C₁₀-C₁₀₀ et
e) d'une amine polyvalente par rapport aux groupements amino primaires et secondaires,
la quantité de e) étant mesurée de telle manière qu'arithmétiquement à un groupement carboxyle de d) correspondent de 1,05 à 4 groupements amino. sous réserve que la quantité de B) soit choisie de sorte que de 1,05 à 4 notes de groupements amino correspondent à une note des groupements carboxyles présents dans A).

2. Résines cationiques selon la revendication 1, dont le composant A) est un copolymère butadiène/acrylonitrile ayant une teneur en acrylonitrile de 5 à 45 % en poids, pour lequel chaque molécule porte en moyenne de 1,5 à 4 groupements carboxyles.

3. Procédé de préparation de résines cationiques conformément à la revendication 1 ou 2, caractérisé en ce que l'on fait réagir en présence de solvants organiques à 130 - 250°C
A) un copolymérisat contenant des groupements carboxyles, comprenant en tant que comonomère
a) de 35 - 100 % en mole de butadiène
b) de 0 - 45 % en mole d'acrylonitrile et
c) de 0 - 20 % en mole de comonomères supplémentaires,
qui présente un poids moléculaire moyen de 500 - 50 000 et porte en moyenne par molécule 1,5 à 4 groupements carboxyles,
avec
B) un produit de condensation
d) d'un acide carboxylique polyvalent aliphatique en C₁₀-C₁₀₀ et
e) d'une amine polyvalente par rapport aux groupements amino primaires et secondaires,
la quantité de e) étant mesurée de telle manière qu'arithmétiquement à un groupement carboxyle de d) correspondent de 1,05 à 4 groupements amino,
sous réserve que la quantité de B) est choisie de sorte que de 1,05 à 4 moles de groupements amino correspondent à une mole des groupements carboxyles présents dans A).

4. Dispersions aqueuses, comprenant 5 - 40 % en poids d'une résine cationique conformément aux revendications 1 à 3.

5. Utilisation des résines cationiques conformément aux revendications 1 à 3 en tant qu'additif de liant pour des vernis pour trempage électrophorétique en vue de t'amélioration de la capacité de charge mécanique des films de vernis.

6. Utilisation des dispersions conformément à la revendication 4 en tant qu'addition aux bains de trempage électrophorétique.

7. Bains de trempage électrophorétique, contenant, par rapport à ta teneur en polymère totale, de 5 - 30 % en poids des résines cationiques conformément aux revendications 1 à 3.

8. Article revêtu à l'aide du vernissage par trempage électrophorétique cathodique, que l'on peut obtenir par l'utilisation d'un bain de vernissage par trempage électrophorétique selon la revendication 7.
